# EUROPEAN PATENT APPLICATION

(11) **EP 2 012 274 A2**
(43) Date of publication of application: **07.01.2009**
(21) Application number: 08159526.6
(22) Date of filing: 02.07.2008
(51) Int. Cl.: G06T 11/60

(54) **Creation of visual composition of product images**

(30) Priority: 02.07.2007 US 772252
(71) Applicant: Universal AD Ltd, 51201 Bnei Brak (IL)
(72) Inventor: Aviel, Amit, 58326 Holon (IL)
(74) Representative: Modiano, Micaela Nadia

(57) **Abstract**

A computerized method for creating in a computer system a visual composition. One or more photographs are provided, including respectively images of products for presenting in the visual composition. The images are outlined producing outlines of the product images. Based on the outlines, an arrangement is selected from multiple previously defined arrangements. The arrangement becomes the selected arrangement for presenting the images in the visual composition. The images are positioned in the selected arrangement based on at least one previously defined rule. A set of metadata is preferably associated with each photograph and/or with each product; and the selection of the selected arrangement is performed based on the metadata and/or on extractable features. Scaling of the images is preferably based on the metadata or on extractable features. Features of the products in the images are preferably extracted based on the outline or from a database. Extractable features include: orientation of the product in the image, lighting at time of capture, camera position at time of capture, faces showing of the product in the image, a rotation angle of the product in the image, a line of symmetry of the product, a scale ratio of product dimension to image dimension, a diagonal of the outline, product meta data, product category, product orientation, product real dimensions, and product colors.

## Description

### FIELD AND BACKGROUND OF THE INVENTION

The present invention relates to a system and a method for creation of visual compositions, and more particularly visual compositions of one or more product images for printed, web, and other electronic advertisements and catalogs

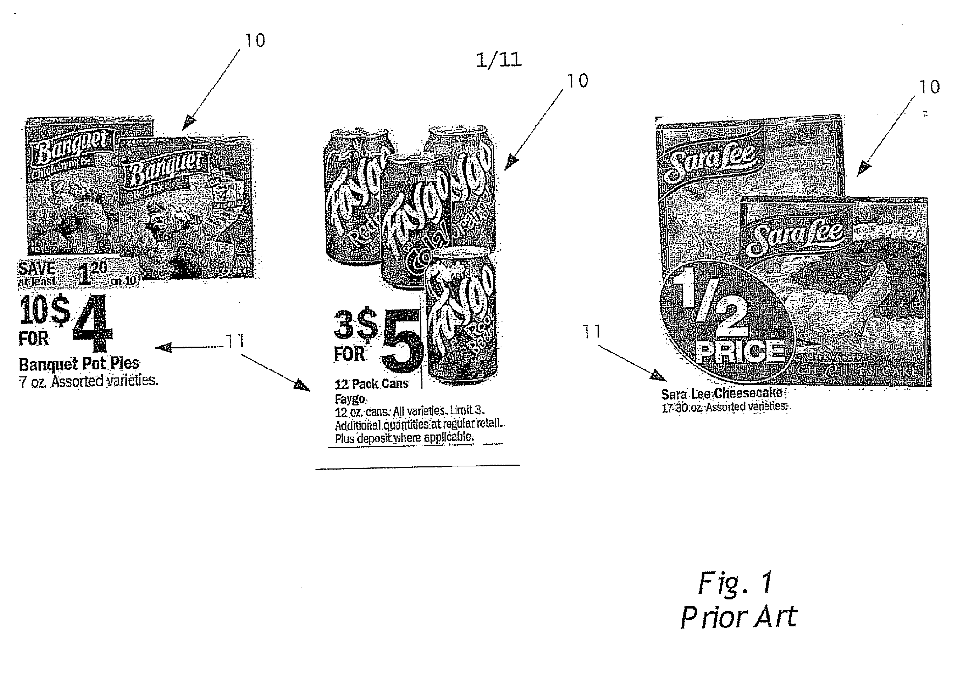

Promotional advertisements in catalogs, free standing inserts, flyers, window posters, billboards and electronic media generally require a graphical layout of a visual composition of one or more images of the product(s), and logo. The visual composition is then combined with textual information such as product information, and price, within a specified space allocated on a page to complete the design of the advertisement. Since advertisement space is costly, there is a need to efficiently utilize the allocated advertisement space in an aesthetically pleasing way. Reference is made to Figure 1 which illustrates several examples of visual composition 10 in various advertisements or catalogs and textual material **11** added to complete the advertisement design.

Graphical layout of product images of advertisements is performed in the prior art by two known methods. In one prior art method, a photographer is given sample items (or packages) to photograph. The items are placed together and photographed typically several times using differing placements of the items being photographed.

A suitable photographic image is then selected for use as the visual composition in the advertisement. In the second prior art method, in order to avoid photographing the same individual product items again for new advertisements in different arrangements, individual product items are commonly photographed, The product images are typically "clipped" from their backgrounds by a graphic designer and the clipped product images are stored in a data base of clipped product images. The visual composition is created in the prior art using the data base of clipped product images. The graphic designer selects the clipped product images, scales each clipped product image to size and places the clipped product image on the available advertisement space in order to compose the visual composition. The graphical design of the visual composition of the advertisement becomes time consuming and costly especially when many e.g. hundreds, of visual compositions are required for a single free standing insert, printed catalog or Internet catalog.

There is thus a need for, and it would be highly advantageous to have a computerized method for creating visual compositions in which product images are scaled appropriately and placed in the available space of the advertisement with minimal intervention from a graphic designer.

### SUMMARY OF THE INVENTION

The term "visual composition" as used herein is an image including a group of product images. The term "visual composition" as used herein uses at least two instances of one image or single instances of multiple images. The terms "image" and "photograph" are used hereinafter interchangeably. The term "arrangement" as used herein is a graphical template which specifies position information at least in part for placement of images in the visual composition.

A term "diagonal" is used herein is defined to be a line connecting two nonconsecutive vertices of a polygon.

According to the present invention there is provided a computerized method for creating in a computer system a visual composition. One or more photographs are provided, including respectively images of products for presenting in the visual composition. The images are outlined producing outlines of the product images. Based on the outlines, available space, geometry and/or maximum dimension in the advertisement, one arrangement is selected from multiple previously defined arrangements. The one arrangement becomes the selected arrangement for presenting the images in the visual composition. The images are positioned in the selected arrangement based on at least one previously defined rule. A set of metadata is preferably associated with each photograph; and the selection of the selected arrangement is performed based on the metadata. The images are preferably selected for including in the visual composition based on the metadata. The selection of the images and/or the arrangement is preferably further based on available space allocated for the visual composition in an advertisement and/or the selections are based on one or more previously defined rules. Scaling of the images is preferably based on the metadata and/or on extractable features. The visual composition is preferably positioned in available space allocated for the visual composition based on a previously defined rule. Previously defined rules are optionally prioritized with weighting factors. A special effect may be applied to one or more images based on the outline.

Features of the products in the images are preferably extracted based on the outlines. Extractable features include: location of an edge of the product in the image, orientation of the product in the image, faces showing of the product in the image, a rotation angle of the product in the image, a line of symmetry of the product, a scale ratio of product dimension to image dimension, a diagonal of the outline , a camera angle with respect to the product during photography, a camera position with respect to the product during photography, and direction and type of lighting during photography. When the product is packaged in a rectangular box, the outline is essentially a closed simple polygon of six sides in a diagonal shot. The angle relative to a horizontal line of the longest diagonal of the closed polygon is used for the selection of the one arrangement. When a previously defined rule specifies a maximum dimension, e.g. height, of the visual composition or focusing on a specific product feature of the product image, the image is preferably rotated in the selected arrangement thereby reducing the dimension of the visual composition. When a previously defined rule specifies a maximum dimension of the visual composition based on an available space for the visual composition within an advertisement, a calculation is performed and the visual composition is scaled to the maximum dimension based on the previously defined rule. When metadata is available, the photograph is associated with a set of metadata and the positioning of the image in the selected arrangement is performed based at least in part on the metadata. The photograph is preferably stored in the computer system as an image file with a file name. The association is performed by a correspondence between an identifier of the product and the file, such as metadata associated with the file or with other parameters within the file, e.g a label attached to the clipping path or to the product outline. The metadata preferably includes a dimension of the product, and the positioning of the product in the arrangement is based on the dimension. The image of a product of comparatively small dimension is placed in the foreground of the selected arrangement and the image of the product of comparatively large dimension is placed in the background of the selected arrangement. Previously defined rules include: (i) wide products behind narrow products; and (ii) high products behind low products. When positioning includes an overlap of images in the selected arrangement, the group of rules includes a constraint restricting said overlap.

According to the present invention there is provided a computerized method for creating in a computer of a visual composition. One or more photographs are provided, including respectively images of products for presenting in the visual composition. The images are outlined and outlines of the product images are produced. The photographs are associated each with a set of metadata. Based on said outline and the metadata, one arrangement is selected from multiple previously defined arrangements. The one arrangement becomes the selected arrangement for presenting the product in the visual composition. The images are positioned in the selected arrangement based on at least one previously defined rule. Previously defined rules include: (i) wide products behind narrow products; and (ii) high products behind low products.

According to the present invention, there is provided a computer system which performs the methods as disclose herein

According to the present invention, there is provided a program storage device readable by a machine, tangibly embodying a program of instructions executable by the machine to perform a method for creating in a computer a visual composition, the method as disclosed herein.

### BRIEF DESCRIPTION OF THE DRAWINGS

The invention is herein described, by way of example only, with reference to the accompanying drawings, wherein:

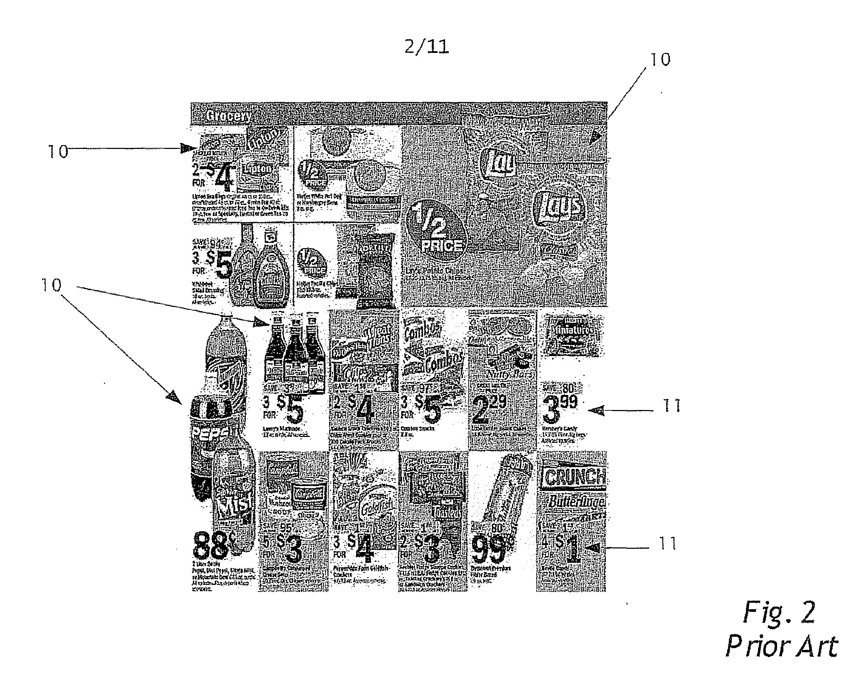

FIG. 1 and FIG. 2 are prior art images of conventional advertisements including visual compositions;
FIG. 3 is a simplified system drawing, according to embodiments of the present invention;
FIG. 4 is a simplified flow diagram illustrating embodiments of the present invention;
FIG. 5 (prior art) illustrates a number of product images shown not to scale as used in accordance with different embodiments of the present invention;
FIG 6 illustrates outlines of the product images of Figure 5, according to embodiments of the present invention;

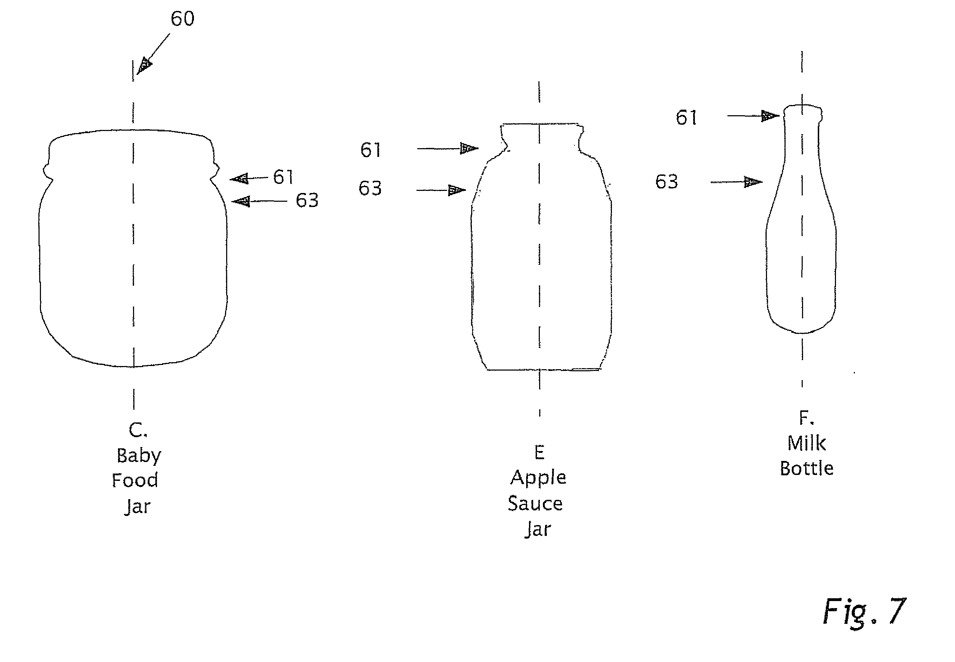

FIG 7 illustrates extraction of features based on some of the outlines of Figure 6;
FIG 8 illustrates outlines, shown to scale after scaling is performed based on feature extraction, according to embodiments of the present invention;
FIG 9 illustrates examples of arrangement templates used for positioning product images, according to embodiments of the present invention;
FIG 10 illustrates positioning of product images, in selected positions of a selected arrangement template, according to embodiments of the present invention; and
FIG. 11 illustrates focusing on specific areas of a product image and tilting product images, according to embodiments of the present invention.

### DESCRIPTION OF THE PREFERRED EMBODIMENTS

The present invention is of a system and method for creating visual compositions in which product images are scaled appropriately and placed in the available space of an advertisement with minimal intervention from a graphic designer.

The principles and operation of a system and method for creating visual compositions, according to the present invention, may be better understood with reference to the drawings and the accompanying description.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

In this description and in the following claims, a "computer system" is defined as one or more software modules, one or more hardware modules, or combinations thereof, which work together to perform operations on electronic data. For example, the definition of computer system includes the hardware components of a personal computer, as well as software modules, such as the operating system of the personal computer. The physical layout of the modules is not important. A computer system may include one or more computers coupled via a computer network. Likewise, a computer system may include a single physical device (such as a mobile phone or Personal Digital Assistant "PDA") where internal modules (such as a memory and processor) work together to perform operations on electronic data.

Those skilled in the art will appreciate that the invention may be practiced in computing environments with many types of computer system configurations, including mobile telephones, PDA's, pagers, hand-held devices, laptop computers, personal computers, multi-processor systems, microprocessor-based or programmable consumer electronics, network PCs, minicomputers, mainframe computers, and the like. The invention may also be practiced in distributed computing environments where local and remote computer systems, which are linked (either by hardwired links, wireless links, or by a combination of hardwired or wireless links) through a communication network, both perform tasks. In a distributed computing environment, program modules may be located in both local and remote memory storage devices.

By way of introduction, a principal intention of the present invention is to provide a computerized method for creating visual compositions, the computerized method being different from the methods currently used by graphical designers so that minimal or no manual adjustment or correction is required on the part of a graphical designer in order to complete the visual composition. The computerized method is characterized by using the outline or "clipping path" of a product image to extract therefrom product features, particularly size information of the product. The size information is used to correctly scale and arrange the product images based on the extracted dimensional information.

Based on the features extracted from the outline, available metadata, input parameters and previously defined rules, the application selects an arrangement template to arrange thereon the product images. Scaling and arrangement in the prior art is performed intuitively by the graphic designer. Image processing filters, e.g. drop shadow, may be applied to one or more instances of the images or to the resulting visual composition, based on metadata provided with the image and/or based on extracted features.

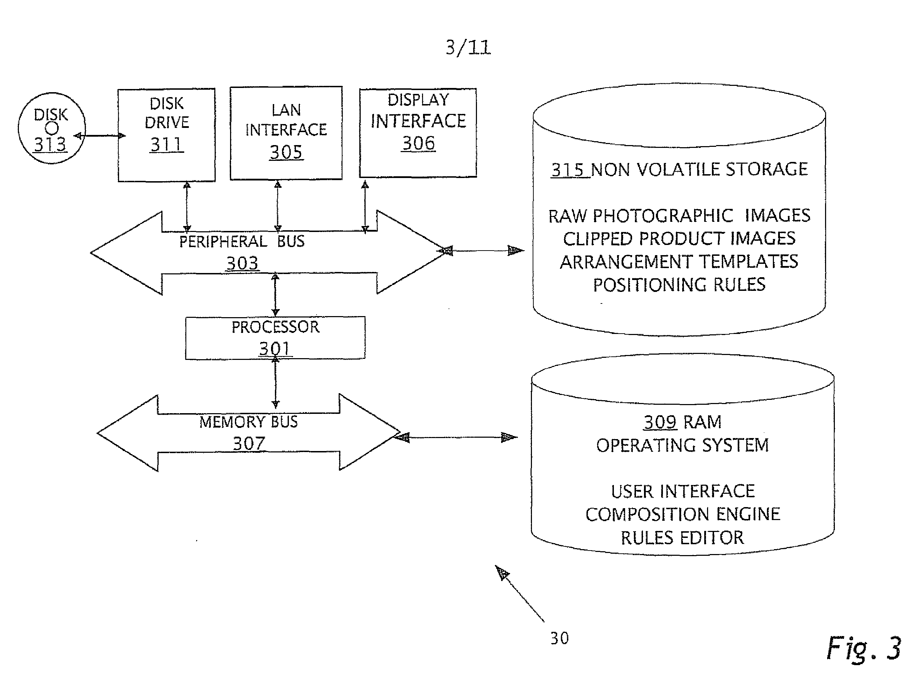

Reference is now made to Figure 3 which illustrates a computer 30, configured according to embodiments of the present invention. Computer 30 includes a processor **301**, a storage mechanism including a memory bus 307 to store information in memory **309**, a local area network (LAN) interface **305**, and a data input mechanism, **311** e.g. disk drive each operatively connected to processor **201** with a peripheral bus **303.** Data input mechanism **311** reads data from a computer readable medium or program storage device, e.g. optical disk **313.**

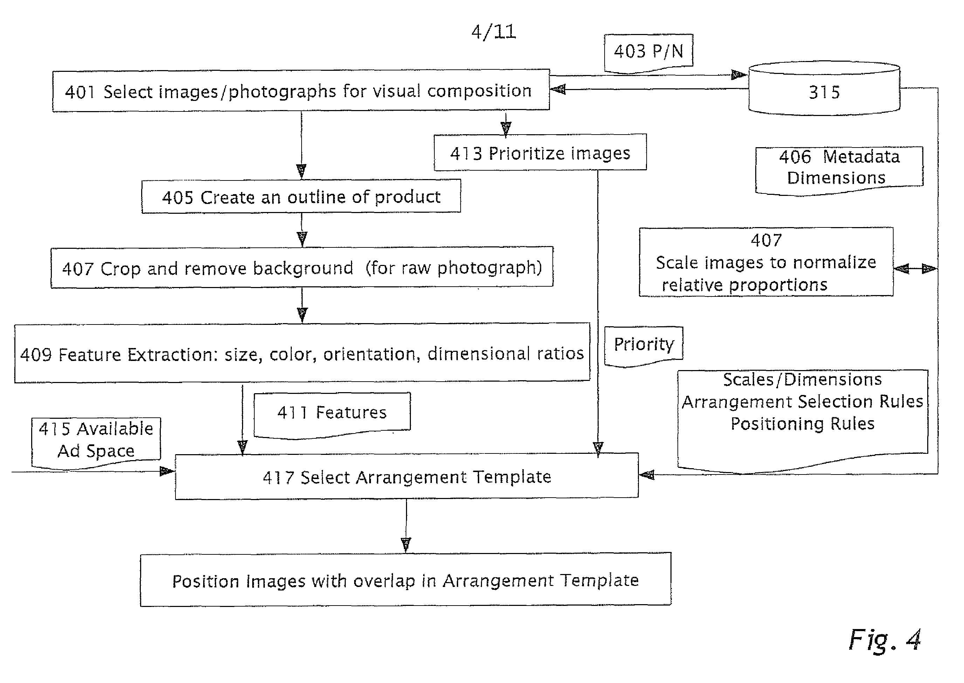

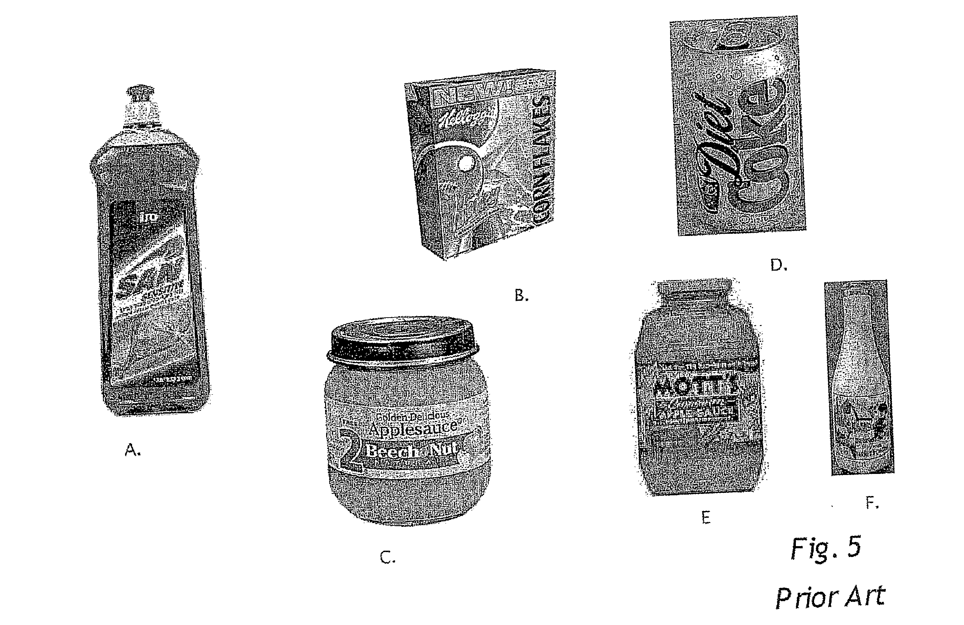

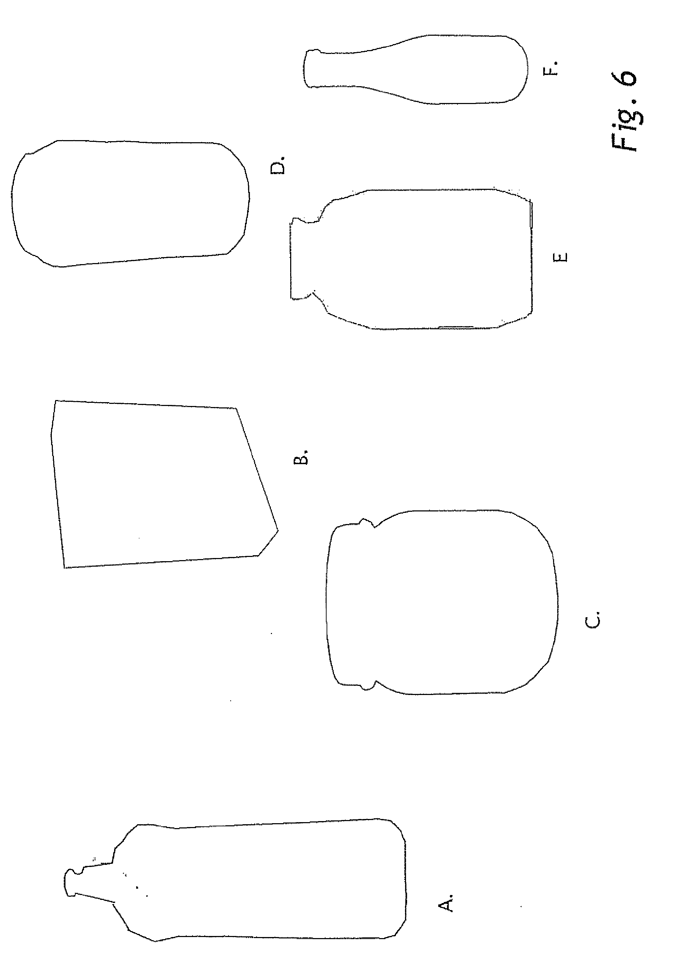

Reference is now also made to Figure 4 which illustrates a method, according to embodiments of the present invention. Photographic images of multiple products are typically stored in non-volatile memory, *e.g*. magnetic disk **315**. One or more images are selected (step **401**) for use in a visual composition. Examples of images are shown in Figure 5. The images are preferably stored in "clipped" format with the background being either white or transparent. Images in clipped format are shown in in Figures 5A, 5B, 5C and 5E. Alternatively, "cropped images" including background cropped around a bounding box are stored in storage **315**, as shown in Figures 5D and 5F. In either case, an outline is created (step **405**) around the image of the selected product. For "cropped images", background is removed outside the outline and the product image is contained inside the outline. Examples of outlines of the product images of Figure 5 are shown in Figure 6.

The selected images are preferably associated with metadata, *e.g.* actual dimensional data of the selected product using an identifier, *e.g*. part number P/N **403** of the selected product image. If metadata **406** are available which provide dimension information of the selected products, then the respective product images may be scaled (step **407**) based on the available metadata in the visual composition.

Metadata **406** may include input parameters regarding the camera that photographed the product image including camera parameters such as: focal length, angle of camera, distance to product, and product angle/position. Metadata **406** may also include cost of product, and product category.

### Feature extraction (step 409)

Otherwise, if metadata **405** including size information of the corresponding selected product is not available, scaling information may be obtained at least in part by extracting (step **409**) features **411** from the outlines.

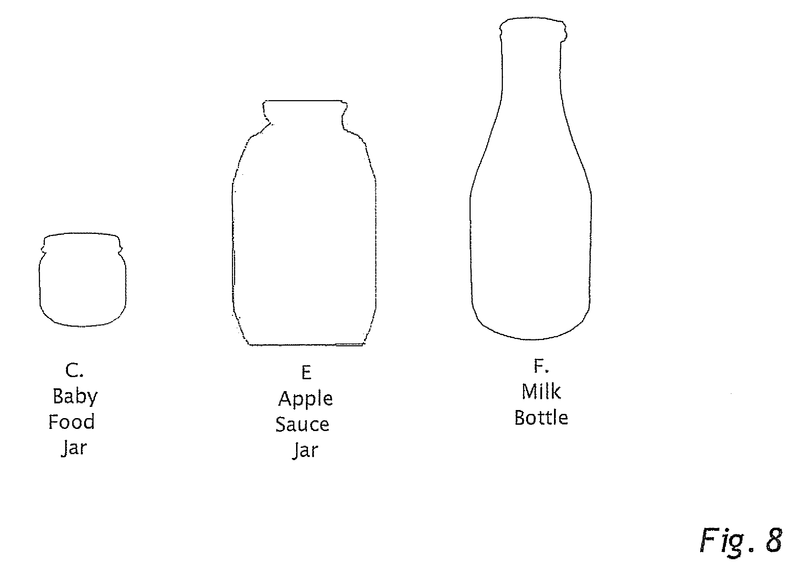

As an example of feature extraction (step **409**) in which scaling information is obtained, consider outline C of an image of a baby food jar, outline E of an apple sauce jar and outline F of a milk bottle all shown again in Figure 6a. In all three outlines (C,E and F) an approximate axis of symmetry is extracted from the symmetry of the outlines. Each of the outlines includes a depression **61** which indicates a cap and a taper **63.** The diameter change of taper **63** may be used as an indication of the correct scaling of each product image. In the outline C of baby food jar the taper is minimal, the cap and base are nearly the same size. In outline E of apple sauce jar, taper 63 is about 50%, the cap diameter is about half the jar diameter. In outline F of milk bottle, the taper is about one third, cap size is about one third maximum bottle diameter. It is known for instance that bottle and jar caps typically have diameters between about one and three inches. It is also known that bottles are rarely taller than about 24-26 inches. Based on the features extracted and further based on available metadata **406** if available, product image 5C of the baby food jar is scaled down accordingly compared with product image of the milk bottle Fig. 5F which is scaled up. The scaling based on feature extraction **409** is shown in Figure 8, or any other method known in the art to extract dimensions out of the image such as calculating the size by applying camera geometry, shot geometry, camera parameters with pixel count and resolution.

As another example of feature extraction, consider outline (Fig. 6B) of product image of com flakes box (Fig. 5B). While there is no axis of symmetry, the outline is well approximated by a polygon of six line segments. An outline consisting of a polygon with six line segments indicates that the product is a box with six faces. The relative length of the line segments indicates the faces of the product which were photographed and the angle at which the photograph was taken. A diagonal, particularly the longest diagonal of the polygon may be used to indicate the view used to photograph the product. An outline of four connected line segments indicates that only the front face of a rectangular bag or box is photographed.

A cylindrical product, e.g. soda can, as shown in Figure 5D, is characterized by an outline (Figure 6D) with two circular arcs (from the respective images of the top and bottom of the can connected by two line segments formed by the images of the sides of the can.

Input parameters obtained either from metadata **406** or from feature extraction **409** which are used to create a visual composition, according to embodiments of the present invention include: the dimensions of products, classification of the products, e.g. can, box, bottle, fruit/vegetable, and colors based for instance on a color histogram extracted from the image. When product images are selected (step **401**), the product images (or products) may be prioritized (step 413) based on metadata 406. The priority indicates the particular products or product images which are most important to be seen in the visual composition, i.e. which product should have better position or bigger size, or will stand in the front.

Other input parameters or rules which influence the visual composition are shape and size of advertisement space **415** available for the visual composition. For instance, for an available advertisement space **415** which is rectangular, horizontal X dimension and vertical Y dimension are used as parameters to determine the overall size of the visual composition. Another input rule typically is the percentage of overlap allowed in the horizontal and vertical directions, such as in per cent, *e,g* 20% vertical overlap and 10 per cent horizontal overlap. The input parameters can be provided by a user or automatically calculated by appropriate algorithm.

### Selection of Arrangement Template (step 417):

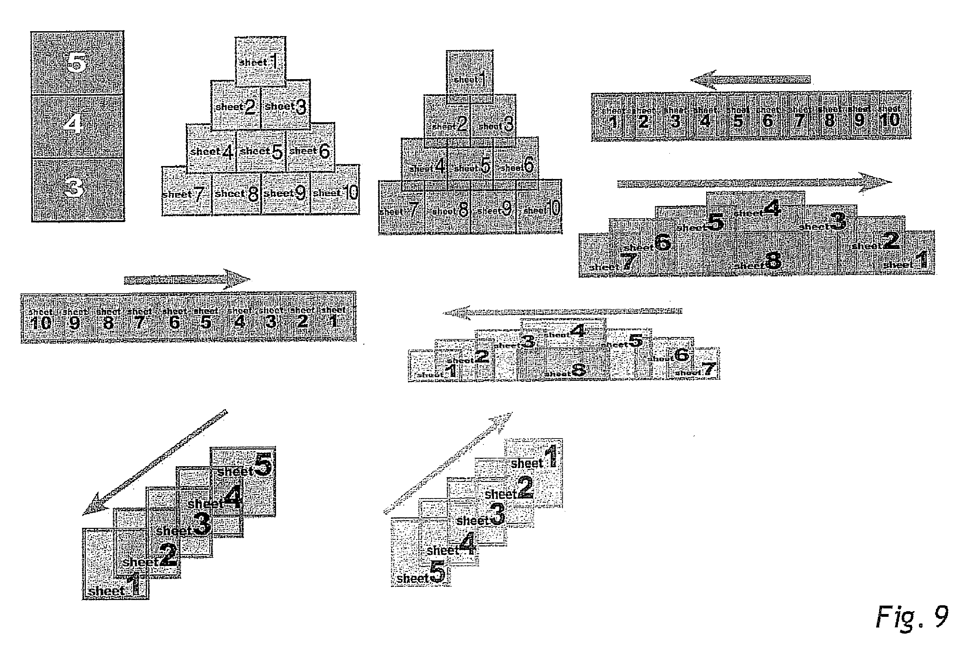

Reference is now made to Figure 9 which illustrates a number of arrangement templates used in accordance with the present invention. The arrangement templates shown in Figure 9 are by way of example only, the application or the user can define new arrangements as required. Each arrangement provide many ways to arrange the product images in the visual composition by selecting specific positions to place product images in a visual composition. Some arrangements can use same image size for every position, while other arrangements may use different image sizes in different positions. In one implementation, the user will select an arrangement from a list of predefined arrangements or user defined arrangement, while in another implementation the selection of arrangement will be conducted by the application, even the position within the arrangement can be done by the user or by application according to parameters such as the colors involved in each product.

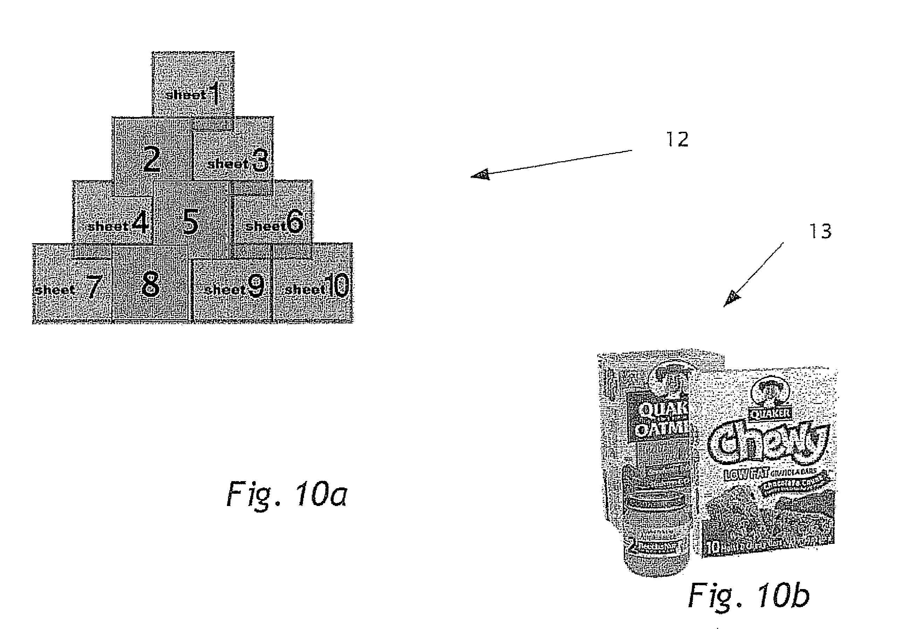

An example of an arrangement template is shown in Figure 10a as selected (step **417**) and the resulting visual composition is shown in Figure 10b. The arrangement can define three dimensional positional order for the product images. Specifically, placing an image in the foreground, *e.g* baby food jar in Figure 10b, and lowering its base line gives the impression of three dimensional depth. Typically, images are placed according to previously defined rules based on extracted features of the outline and/or on the metadata so that images of relatively smaller products, *e.g* baby food jar are placed in the foreground and larger products *e.g*. Quaker Oatmeal box is placed in the background. Typically, wide products are placed behind narrow products and high products are placed behind low products.

Other previously defined rules which govern how the images are placed into the arrangement relate overall composition size, overlapping of product images, tilting of product images, focus on specific features of product images.

An example of input parameters and rules are listed as follows which lead to the creation of visual composition of Figure 10b.

Product Dimensions are acquired as metadata for each product image from database 315 by providing the database with an identifier of each product:
i.A: H=11", W=8", D=2",
ii.B: H=11",W=8", D=2",
iii.C: H=4.5", W=3.5, D=3.5"

The input rules used are:
Allow overlapping of 33% on X
Allow overlapping of 90% on Y
Reduce visual X dimension
Reduce visual Y dimension
Visual composition is to be bound by a square aspect ratio
No Tilt: no tilting of product images
No focus on any portion of any product image

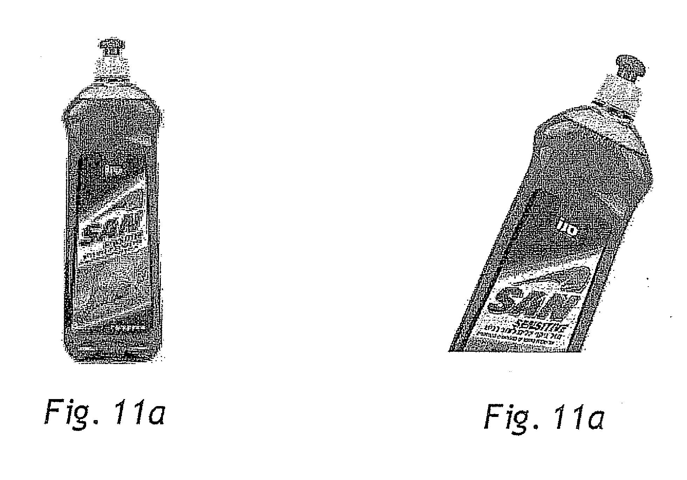

Reference is now made to Figure 11, which illustrates tilting and focusing on specific product image features, according to an embodiment of the present invention. In Figure 11a, the full product image is shown, however the logo is small and not readable. By tilting the full image and focusing on the more important parts of the image, *e.g* the logo, the logo is made readable and the advertisement is more effective. The product looks bigger, the user feels that their is more liquid in the bottle.

While the invention has been described with respect to a limited number of embodiments, it will be appreciated that many variations, modifications and other applications of the invention may be made.

## Claims

1. A computerized method for creating in a computer system a visual composition, the method comprising the steps of:
(a) providing at least one photograph, including respectively at least one image of at least one product for presenting in the visual composition;
(b) outlining said at least one image, thereby producing an outline of at least one product image;
(c) based on said outline, selecting one arrangement from a plurality of previously defined arrangements, said one arrangement becoming the selected arrangement for presenting said at least one image in the visual composition;
(d) positioning said at least one image in said selected arrangement based on at least one previously defined rule, thereby creating the visual composition.

2. The computerized method, according to claim 1, further comprising the step of:
(e) associating with each photograph a set of metadata; wherein said selecting said selected arrangement is performed based on said metadata.

3. The computerized method, according to claim 2, further comprising the step of:
(f) selecting said at least one image for including in the visual composition based on said metadata.

4. The computerized method, according to claim 2, further comprising the step of:
(f) scaling said at least one image based on said metadata.

5. The computerized method, according to claim 1, wherein said selecting is further based on available space allocated for the visual composition in an advertisement.

6. The computerized method, according to claim 1, wherein selecting said at least one image for including in the visual composition is based on at least one previously defined rule.

7. The computerized method, according to claim 1, further comprising the step of:
(e) positioning the visual composition in available space allocated for the visual composition based on at least one previously defined rule.

8. The computerized method, according to claim 1, wherein said at least one previously defined rule is prioritized with a weighting factor.

9. The computerized method, according to claim 1, further comprising the step of:
(e) based on said outline, applying a special effect to said at least one image.

10. The computerized method, according to claim 1, further comprising the step of:
(e) extracting at least one feature of said least one product in said at least one image, said extracting based on said outline, said at least one feature selected from the group consisting of: location of an edge of said at least one product in said at least one image, orientation of said least one product in said at least one image, a face showing of said at least one product in said at least one image, a rotation angle of said least one product in said at least one image, a line of symmetry of said at least one product, a scale ratio of product dimension to image dimension, a diagonal of said outline, a camera angle with respect to product during photography , a camera position with respect to product during photography, and direction and type of lighting during photography.

11. The computerized method, according to claim 1, wherein said at least one product is packaged in a rectangular box, wherein said outline is essentially a closed simple polygon of six sides wherein the angle relative to a horizontal line of the longest diagonal of said closed polygon is used for said selecting said one arrangement.

12. The computerized method, according to claim 1, wherein said at least one previously defined rule specifies a maximum dimension of the visual composition based on an available space for the visual composition within an advertisement, further comprising the step of:
(f) rotating said at least one image in said selected arrangement thereby reducing the dimension of said visual composition.

13. The computerized method, according to claim 1, further comprising the step of:
(f) based on said outline, focusing on a specific product feature.

14. The computerized method, according to claim 1, wherein said at least one previously defined rule specifies a maximum dimension of the visual composition based on an available space for the visual composition within an advertisement, further comprising the step of:
(f) calculating and scaling the visual composition to said maximum dimension based on said at least one previously defined rule.

15. The computerized method, according to claim 1, further comprising the step of:
(e) associating with at least one photograph a set of metadata; wherein said positioning of said at least one image in said selected arrangement is performed based at least in part on said metadata.

16. The computerized method, according to claim 15, wherein said photograph is stored in the computer as an image file with a file name whereby said associating is performed by a correspondence between an identifier of said at least one product and said image file.

17. The computerized method, according to claim 15, wherein said metadata includes a dimension of said at least one product, wherein said positioning is based on said dimension.

18. The computerized method, according to claim 17, wherein said at least one image of said at least one product of comparatively small said dimension is placed in the foreground of said selected arrangement and wherein said at least one image of said at least one product of comparatively large said dimension is placed in the background of said selected arrangement.

19. The computerized method, according to claim 1, wherein said least one previously defined rule is selected from the group of rules consisting of: (i) wide products behind narrow products; and (ii) high products behind low products.

20. The computerized method, according to claim 19, wherein said positioning includes an overlap of said at least one image in said selected arrangement, and the group of rules includes a constraint restricting said overlap

21. A computer system which performs the method steps of claim 1

22. A computerized method for creating in a computer system of a visual composition, the method comprising the steps of:
(a) providing at least one photograph, including respectively at least one image of at least one product for presenting in the visual composition;
(b) outlining said at least one image, thereby producing at least one outline of said at least one product;
(c) associating with said at least one photograph a set of metadata;
(d) based on said at least one outline and the metadata, selecting one arrangement from a plurality of previously defined arrangements, said one arrangement becoming the selected arrangement for presenting said at least one said at least one image in the visual composition;
(e) positioning of said at least one image in said selected arrangement based on said metadata and on at least one previously defined rule.

23. The computerized method, according to claim 22, wherein said least one previously defined rule is selected from the group of rules consisting of: (i) wide products behind narrow products; and (ii) high products behind low products.

24. A computer system which performs the method steps of claim 22

25. A program storage device readable by a machine, tangibly embodying a program of instructions executable by the machine to perform a method for creating a visual composition, the method comprising the steps of claim 1.

26. A program storage device readable by a machine, tangibly embodying a program of instructions executable by the machine to perform a method for creating a visual composition, the method comprising the steps of claim 22.
